# DEMANDE DE BREVET EUROPEEN

(11) **EP 4 610 089 A1**
(43) Date de publication de la demande: **03.09.2025**
(21) Numéro de dépôt: 25161400.4
(22) Date de dépôt: 03.03.2025
(51) Int. Cl.: B60L 8/00, B60L 50/20, H02J 7/35, H02S 20/30

(54) **DISPOSITIF SOLAIRE DE RECHARGE POUR VÉHICULE ÉLECTRIQUE**

(30) Priorité: 01.03.2024 FR 2402069
(71) Demandeur: Moving Power Lab, 06620 Gourdon (FR)
(72) Inventeur: Gignoux, Eric, 06560 Valbonne (FR); Lebreton, Xavier, 06580 Pegomas (FR); Rothhut, Sébastien, 06370 Mouans-Sartoux (FR)
(74) Mandataire: Hautier IP

(57) **Abrégé**

L'invention concerne un dispositif solaire (1) de recharge d'un véhicule présentant un axe longitudinal (L), le dispositif solaire étant configuré pour être positionné sur un support (21) du véhicule, le dispositif solaire comprenant un panneau photovoltaïque (111) présentant un cadre (11), un système d'inclinaison (12) configuré pour permettre une inclinaison du cadre, autour d'un axe de rotation (R1) horizontal et parallèle à l'axe longitudinal, un système de verrouillage (13) configuré pour sélectivement verrouiller et déverrouiller le système d'inclinaison en position, de sorte à permettre l'inclinaison du cadre sur le support selon une pluralité d'inclinaisons entre une position d'inclinaison θ minimale, horizontale, et une inclinaison θ maximale délimitant un secteur angulaire compris entre au moins 0° et 70° par rapport à l'horizontale, de préférence entre 0° et 90°.

## Description

### DOMAINE TECHNIQUE

La présente invention concerne le domaine des véhicules électriques. La présente invention concerne en particulier un dispositif solaire de recharge permettant la recharge de véhicules électriques. Elle trouve pour application particulièrement avantageuse, les véhicules à propulsion musculaires assistés par un moteur électrique tels que les vélos (bicyclettes) électriques, les tricycles électriques ou les quadricycles électriques.

### ETAT DE LA TECHNIQUE

Il existe plusieurs dispositifs solaires permettant la recharge de véhicules électriques. Ces dispositifs peuvent être positionnés sur différentes composantes du véhicule, cependant ils comprennent en général tous un élément photovoltaïque permettant la récupération d'énergie solaire, ainsi qu'un élément électrique/électronique permettant à l'énergie solaire d'être transférée à une batterie du véhicule. Des exemples de ces types de véhicules peuvent être trouvés dans les demandes internationales WO 2012/141562A2, WO2020/081215A1 ou encore dans les demandes de brevet CN107364538A, US2019/105992A1. Ces dispositifs présentent l'inconvénient d'être soit encombrants, soit peu aisés d'utilisation, soit peu efficaces en terme de recharge électrique.

Un exemple de dispositif solaire permettant la recharge d'un vélo électrique est décrit dans le brevet CN202642016U. Cette antériorité expose un dispositif photovoltaïque rétractable et qui lorsqu'il est déployé s'étend jusque sur la selle du vélo. Cependant, la recharge de ce vélo reste en pratique peu efficace.

Un autre exemple de dispositif sur un vélo électrique est décrit dans le brevet CN1631713A. Cette antériorité propose un panneau photovoltaïque qui s'incline selon un axe transversal à l'axe d'avancée du vélo. En pratique il s'avère que cette solution n'est pas satisfaisante. Elle ne permet pas de recharger la batterie dans un temps suffisamment court. Par ailleurs elle est encombrante. Pour répondre à cette problématique de charge insuffisante des batteries du cycle, des solutions proposent un ou des panneaux photovoltaïques embarqués sur une remorque tractée par un vélo. C'est cette solution qui est adoptée par les utilisateurs effectuant des trajets longs ou qui stationnent leurs cycles dans des lieux où le soleil ne permet pas une charge suffisante des batteries. Les solutions proposées à ce jour reposant sur des remorques tractées présentent un encombrement important sur la route comme lors du stationnement du vélo.

Un objet de la présente invention est de réduire au moins l'un des inconvénients précédemment cités.

Un autre objet de la présente invention est de proposer une solution permettant d'améliorer la recharge d'un véhicule électrique tout en présentant un encombrement satisfaisant.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un premier aspect on prévoit un dispositif solaire de recharge d'un véhicule, par exemple d'un vélo, le véhicule présentant un axe longitudinal, le dispositif solaire étant configuré pour être positionné sur un support du véhicule, le dispositif solaire comprenant :
- un panneau photovoltaïque présentant un cadre,
- un système d'inclinaison configuré pour permettre une inclinaison du cadre, autour d'un axe de rotation horizontal et parallèle à l'axe longitudinal,
- un système de verrouillage configuré pour sélectivement verrouiller et déverrouiller le système d'inclinaison en position, de sorte à permettre l'inclinaison du cadre sur le support selon une pluralité d'inclinaisons entre une position d'inclinaison θ minimale, horizontale, et une inclinaison θ maximale délimitant un secteur angulaire compris entre au moins 0° et 70° par rapport à l'horizontale, de préférence entre 0° et 90°
le système de verrouillage comprenant un organe de commande et un organe mobile de verrouillage, l'organe de commande étant configuré pour être manipulé par un utilisateur de sorte à déplacer l'organe mobile de verrouillage afin de sélectivement verrouiller ou déverrouiller le système d'inclinaison en position.

Le dispositif comprend un dispositif électronique configuré de sorte à fournir, de préférence à afficher, une donnée relative à une puissance fournie par le panneau photovoltaïque en fonction de l'inclinaison θ du cadre.

Ainsi, l'invention propose une solution afin d'optimiser la recharge d'un véhicule électrique tout en minimisant son encombrement. L'inclinaison du panneau photovoltaïque permet au dispositif d'optimiser la surface du panneau exposé au soleil en inclinant le panneau suivant la position du soleil par exemple.

De plus, les dimensions du panneau ainsi que le secteur angulaire d'inclinaison du panneau permettent une réduction de l'encombrement du panneau lors de son stationnement comme lorsqu'il est en mouvement. Contrairement aux solutions prévues par l'art antérieur, l'invention permet à la fois une recharge efficace tout en limitant au maximum son encombrement.

Enfin, cette solution propose un système de verrouillage présentant peu d'éléments permettant d'assurer que le dispositif soit relativement léger et facile de manipulation pour un utilisateur seul et permettant par suite de réduire son coût et sa maintenance.

Selon un autre aspect on prévoit un ensemble comprenant un véhicule, de préférence un cycle, et un dispositif solaire selon l'invention équipant le véhicule.

Ainsi, le dispositif peut être positionné sur n'importe quel type de cycle électrique de façon efficace et simple du fait de la conception du dispositif. De plus le dispositif tel que revendiqué peut être installé sur un véhicule et permettre une amélioration de la récupération d'énergie en phase de roulage tout en assurant un encombrement limité.

Selon un autre aspect, on prévoit, un dispositif solaire de recharge d'un véhicule, par exemple d'un vélo, le dispositif solaire étant configuré pour être positionné sur un support du véhicule, le dispositif solaire comprenant :
- un panneau photovoltaïque présentant un cadre,
- un système d'inclinaison configuré pour permettre une inclinaison du cadre, autour d'un axe de rotation, l'axe de rotation étant de préférence horizontal et de préférence parallèle à un axe longitudinal du vélo,
- un système de verrouillage configuré de sorte à sélectivement verrouiller et à déverrouiller le système d'inclinaison en position, de sorte à permettre une inclinaison θ du cadre sur le support selon une pluralité d'inclinaisons entre une position d'inclinaison θ minimale, horizontale, et une inclinaison θ maximale,
- comprenant un dispositif électronique configuré de sorte à fournir, de préférence à afficher, une donnée relative à une puissance fournie par le panneau photovoltaïque en fonction de l'inclinaison θ du cadre.

Le dispositif peut être utilisé et exploité indépendamment des caractéristiques relatives à l'orientation de l'axe de rotation, par exemple d'une orientation parallèle à un axe longitudinal du vélo. Ainsi, le dispositif électronique et l'application associés au dispositif solaire permettent une recharge optimisée du véhicule. Un utilisateur pourra alors connaitre l'inclinaison préférentielle du panneau photovoltaïque sur une période précise qu'il pourra lui-même renseigner suivant son temps de stationnement prévu et sa position par rapport au soleil. De plus l'utilisateur pourra avoir ces informations rapidement via son terminal utilisateur et pourra adapter l'inclinaison en conséquence.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un vélo ainsi qu'un dispositif selon un mode de réalisation de l'invention positionné sur le vélo, un panneau photovoltaïque du dispositif étant disposé sensiblement à l'horizontale.
Les figures 2A à 2D sont des vues respectivement en perspective vue de haut, d'un côté, d'un autre côté et du dessous du dispositif en position horizontale et en configuration verrouillée selon un mode de réalisation de l'invention.
La figure 3 représente une vue de dessous du dispositif toujours en position horizontale et en configuration déverrouillée selon un mode de réalisation de l'invention.
La figure 4A représente le vélo et le dispositif illustrés en figure 1, le panneau photovoltaïque étant en position inclinée par rapport à l'horizontale selon un mode de réalisation de l'invention.
La figure 4B représente une vue en perspective de haut du dispositif illustré aux figures 2A à 3, le panneau photovoltaïque étant en position inclinée par rapport à l'horizontale selon un mode de réalisation de l'invention.
La figure 5A représente le vélo et le dispositif illustrés en figures 1 et 4A, le panneau photovoltaïque étant en position verticale selon un mode de réalisation de l'invention.
La figure 5B représente une vue en perspective de haut du dispositif sans le panneau photovoltaïque, le dispositif étant en position verticale selon un mode de réalisation de l'invention.
La figure 6 représente un exemple de système comprenant un véhicule équipé d'un dispositif selon un mode de réalisation de l'invention, ainsi que des terminaux utilisateurs ou des serveurs distants qui communiquent avec le dispositif.
Les figures 7A et 7B représentent le dispositif solaire selon un mode de réalisation de l'invention, le dispositif étant respectivement en position verticale et en position horizontale.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Le véhicule présente un axe longitudinal, le dispositif solaire étant configuré pour être positionné sur un support du véhicule, tel un porte bagage, le dispositif solaire comprenant un panneau photovoltaïque présentant un cadre, un système d'inclinaison configuré pour permettre une inclinaison du cadre, autour d'un axe de rotation horizontal, un système de verrouillage configuré pour sélectivement verrouiller et déverrouiller le système d'inclinaison en position, de sorte à permettre l'inclinaison du cadre sur le support selon une pluralité d'inclinaisons entre une position d'inclinaison θ minimale, horizontale, et une inclinaison θ maximale délimitant un secteur angulaire compris entre au moins 0° et 70° par rapport à l'horizontale, de préférence entre 0° et 90°. Cela permet ainsi d'obtenir l'ensoleillement le plus important possible sur le panneau photovoltaïque, en fonction de la position du soleil selon les saisons et l'heure de la journée, ainsi que, dans certains cas, de s'affranchir de l'ombre de l'utilisateur par exemple lors du mouvement du véhicule.

Selon un exemple, le système de verrouillage comprend un organe de commande et un organe mobile de verrouillage, l'organe de commande étant configuré pour être manipulé par un utilisateur de sorte à déplacer l'organe mobile de verrouillage, de préférence de sorte à faire translater l'organe mobile de verrouillage suivant une direction dite de translation, afin de sélectivement verrouiller ou déverrouiller le système d'inclinaison en position. Cela permet ainsi d'avoir un système de verrouillage simple d'utilisation, peu encombrant, léger et par conséquence avec un coût limité.

Selon un exemple, l'organe de commande comprend l'un parmi une poignée ou une tirette. L'utilisation d'une poignée ou d'une tirette assure une utilisation intuitive du dispositif par un utilisateur.

Selon un exemple, l'organe de commande est configuré de sorte que l'utilisateur puisse le manipuler à une main et incliner le cadre tout en conservant la position de cette main. En effet, l'utilisateur peut alors mettre en rotation le panneau facilement et sans besoin d'aide d'un utilisateur additionnel.

Selon un exemple, l'organe de commande est configuré de sorte que l'utilisateur puisse simultanément le manipuler avec certains des doigts de l'une de ses mains et incliner le cadre en saisissant le cadre notamment avec ses autres doigts. Ainsi entre ces deux étapes (manipulation du dispositif de commande et inclinaison du cadre), l'utilisateur n'a pas besoin de déplacer ses mains. L'utilisation du dispositif est ainsi grandement facilitée.

Selon un exemple, le dispositif solaire comprend au moins un premier organe complémentaire de verrouillage configuré pour être solidaire du support et pour coopérer avec l'organe mobile de verrouillage de sorte à, lorsqu'ils sont en prise, verrouiller l'inclinaison du cadre et de sorte à, lorsqu'ils ne sont pas en prise, autoriser une libre rotation du cadre autour de l'axe de rotation. L'utilisation d'un dispositif permettant de passer alternativement d'une configuration verrouillée à une configuration déverrouillée et vis versa de façon simplifiée permet une inclinaison selon un axe préféré.

Selon un exemple, le dispositif solaire comprend un deuxième organe complémentaire de verrouillage configuré pour être solidaire du support et pour coopérer avec l'organe mobile de verrouillage uniquement lorsque le cadre est dans la position d'inclinaison θ minimale, de sorte à, lorsqu'ils sont en prise, verrouiller l'inclinaison du cadre et de sorte à, lorsqu'ils ne sont pas en prise, autoriser une libre rotation du cadre autour de l'axe de rotation.

Selon un exemple, le dispositif solaire est configuré pour que, uniquement lorsque le cadre est dans la position d'inclinaison θ minimale, l'organe mobile de verrouillage coopère simultanément avec l'au moins un premier organe complémentaire de verrouillage et avec le deuxième organe complémentaire de verrouillage. Cela permet de sécuriser le positionnement du dispositif et de pallier les vibrations possibles lorsque celui-ci est positionné à l'horizontal. En effet, en général cette position est adoptée lors du roulage.

Selon un exemple, l'un parmi l'au moins un premier organe complémentaire de verrouillage et l'organe mobile de verrouillage comprend plusieurs encoches, et l'autre parmi l'au moins un premier organe complémentaire de verrouillage et l'organe mobile de verrouillage comprend une première portion, la première portion étant configurée de sorte à coopérer avec chacune des encoches. Le dispositif permet ainsi, par une complémentarité entre une première portion qui peut être une saillie et des encoches, d'assurer une position de verrouillage sécurisé quelle que soit l'inclinaison du panneau.

Selon un exemple, l'un parmi le deuxième organe complémentaire de verrouillage et l'organe mobile de verrouillage comprend une encoche, et l'autre parmi le deuxième organe complémentaire de verrouillage et l'organe mobile de verrouillage comprend une deuxième portion, la deuxième portion étant configurée de sorte à coopérer avec l'encoche. Le dispositif permet ainsi, par une complémentarité entre une deuxième portion qui peut être une saillie et l'encoche, d'assurer une position de verrouillage efficace lorsque le panneau est positionné à l'horizontal.

Selon un exemple, chacune des encoches du au moins un premier organe complémentaire de verrouillage s'étend radialement autour de l'axe de rotation de sorte à permettre plusieurs inclinaisons θ différentes. Ainsi le premier organe complémentaire de verrouillage peut présenter la forme d'une roue à encoches présentant une pluralité d'encoches permettant différents degrés d'inclinaisons.

Selon un exemple, le dispositif solaire comprend au moins deux, et de préférence deux premiers organes complémentaires de verrouillage configurés pour être solidaire du support et pour coopérer avec l'organe mobile de verrouillage de sorte à, lorsqu'ils sont en prise, verrouiller l'inclinaison du cadre et de sorte à, lorsqu'ils ne sont pas en prise, autoriser une libre rotation du cadre autour de l'axe de rotation.

Selon un exemple, la première portion comprend deux zones de verrouillage, formant de préférence chacune une saillie ou une extrémité de tige, les deux zones de verrouillage étant configurées de sorte à coopérer simultanément avec chacune des encoches des deux premiers organes complémentaires de verrouillage.

Selon un exemple, le système d'inclinaison comprend au moins une charnière, de préférence deux charnières, l'au moins une charnière étant configuré de sorte à réaliser une liaison pivot entre le cadre et le support autour de l'axe de rotation. Cette liaison pivot permet une rotation du panneau sur un flanc du véhicule.

Selon un exemple, le système d'inclinaison comprend une butée, la butée étant configuré pour être une butée de fin de course dans la position d'inclinaison θ minimale du cadre. Cette butée permet au panneau d'arrêter sa rotation en étant posé sur le support.

Le dispositif comprend un dispositif électronique configuré de sorte à fournir, de préférence à afficher, une donnée relative à une puissance fournie par le panneau photovoltaïque selon l'inclinaison θ du cadre. Ladite donnée relative à la puissance est fonction de l'inclinaison du cadre. Elle dépend en partie au moins de l'inclinaison du cadre. Ainsi l'utilisateur peut faire varier l'inclinaison du cadre et visualiser, pour chaque inclinaison, la puissance produite par le panneau. De préférence, le dispositif électronique est porté par, et de préférence intégré au cadre.

Selon un exemple, le panneau affiche cette donnée de puissance sur un écran du dispositif électronique compris dans le dispositif solaire. Cela permet de ne pas avoir besoin d'élément additionnel extérieur au dispositif pour déterminer si l'inclinaison est optimale.

Selon un autre exemple, le panneau affiche et/ou fournit cette donnée de puissance à un terminal distant, par liaison sans fil, par exemple à un terminal utilisateur tel qu'un téléphone intelligent de l'utilisateur du dispositif solaire. Cela permet d'obtenir la donnée même à distance du dispositif. Selon un exemple le dispositif électronique est configuré de sorte à communiquer par liaison sans fil des données avec une application hébergée sur l'un parmi un terminal distant, par exemple pris parmi un smartphone, un ordinateur, une montre et/ou au moins un serveur. L'application est configurée de sorte à afficher au moins une donnée parmi : une donnée relative à une puissance reçue par le panneau photovoltaïque, une donnée de temps de stationnement prévu à renseigner par l'utilisateur, une donnée d'inclinaison du panneau photovoltaïque, et une estimation de l'énergie collectée.

Selon un exemple, la donnée relative à une puissance fournie par le panneau photovoltaïque est prise parmi : une valeur de puissance, un niveau sur une jauge, une valeur sur une échelle de valeurs, un nombre de diodes électroluminescentes (DEL) éclairées, une couleur parmi une pluralité de couleurs ou un code couleur, ou une icône parmi une liste d'icônes.

Selon un exemple, le dispositif électronique comprend un module de communication configuré de sorte à échanger par liaison sans fil des données prise parmi un temps de stationnement prévu renseigné par l'utilisateur, une estimation d'énergie collectée, une donnée d'inclinaison du panneau photovoltaïque avec un terminal distant tel un terminal utilisateur pris parmi un téléphone intelligent, un ordinateur et/ou avec au moins un serveur. Cela permet à l'utilisateur d'optimiser au maximum sa charge en prenant en compte par exemple des paramètres de stationnement prolongé à une position géographique précise.

Selon un exemple, le véhicule comprend une structure prise parmi un porte bagage et un coffre, et dans lequel le dispositif solaire est monté sur ladite structure, de préférence en étant entièrement supporté par ladite structure. Cela permet d'accrocher le dispositif sur un support déjà présent sur un véhicule.

Selon un exemple, le véhicule est pris parmi : un bicycle, un tricycle, un quadricycle.

Selon un exemple, le véhicule présente deux flancs latéraux et le dispositif est configuré de sorte qu'au moins en position d'inclinaison θ maximale, le cadre est, en partie au moins, situé le long d'un flanc latéral. Cela permet de positionner le panneau sur un seul côté du véhicule réduisant ainsi l'encombrement du panneau photovoltaïque que ce soit en roulage ou en stationnement.

Selon un exemple, le panneau photovoltaïque présente deux faces principales opposées et un bord inférieur. Une première face ou face supérieure peut être exposée au soleil et une deuxième face ou face inférieure peut être en contact avec le dispositif solaire.

Selon un exemple, le cadre présente un bord inférieur et le dispositif est configuré de sorte qu'au moins en position d'inclinaison θ maximale, un plan vertical passant par le bord inférieur délimite deux portions d'espace, la structure étant entièrement comprise dans l'une seulement de ces deux portions d'espace.

Selon un exemple, le véhicule est entièrement compris dans l'une seulement de ces deux portions d'espace. Ainsi, le cadre est positionné sur un coté du véhicule. Il peut ainsi être positionné le long d'un flanc latéral du véhicule.

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces ».

Le terme « solidaire » utilisé pour qualifier la liaison entre deux pièces signifie que les deux pièces sont liées/fixées l'une par rapport à l'autre, selon tous les degrés de liberté, sauf s'il est explicitement spécifié différemment. Par exemple, s'il est indiqué que deux pièces sont solidaires en translation selon une direction X, cela signifie que les pièces peuvent être mobiles l'une par rapport à l'autre, possiblement selon plusieurs degrés de liberté, à l'exclusion de la liberté en translation selon la direction X. Autrement dit, si on déplace une pièce selon la direction X, l'autre pièce effectue le même déplacement.

Dans la description détaillée qui suit, il pourra être fait usage de termes tels que « horizontal », « vertical », « longitudinal », « transversal », « supérieur », « inférieur », « haut », « bas », « avant », « arrière », « intérieur », « extérieur ». Ces termes doivent être interprétés de façon relative en relation avec la position normale du dispositif par rapport au sol et par rapport à sa position sur un véhicule. Par exemple, la notion de « horizontale » correspond à un plan contenant le support ainsi que l'axe longitudinal (L) du véhicule.

Dans la suite de la description détaillée qui suit il pourra être fait usage des termes temps réel ou instantané. Ces termes doivent être interprétés comme un temps correspondant à quelques secondes.

On utilisera également un repère dont la direction arrière/avant correspond à l'axe x, la direction transversale ou droite/gauche correspond à l'axe y et la direction longitudinale ou bas/haut correspond à l'axe z.

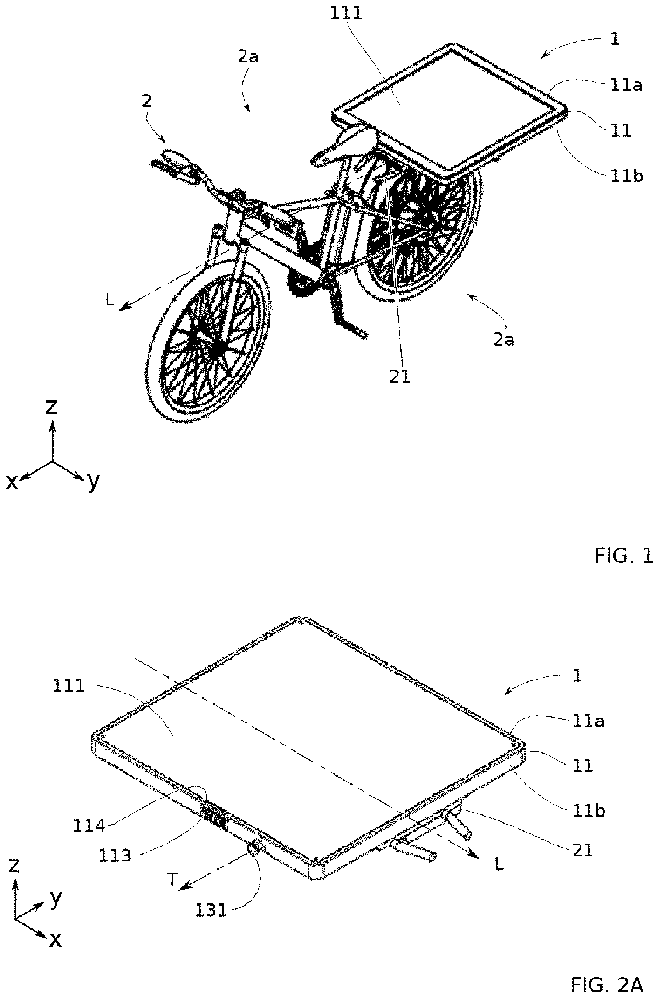

La présence invention concerne un dispositif solaire 1, configuré pour recharger un véhicule 2, par exemple un vélo. Le véhicule 2 présente un axe longitudinal L. L'axe longitudinal L correspond à la direction d'avancée du véhicule 2 lorsqu'il avance en ligne droite. Le dispositif solaire 1 est configuré pour être positionné sur un support 21 du véhicule 2 comme illustré en figure 1.

Un dispositif solaire 1 permettant la recharge d'un véhicule 2 comprend en général un élément photovoltaïque permettant la récupération d'énergie solaire, ainsi qu'un élément électrique/électronique permettant à l'énergie solaire d'être transférée à une batterie du véhicule 2.

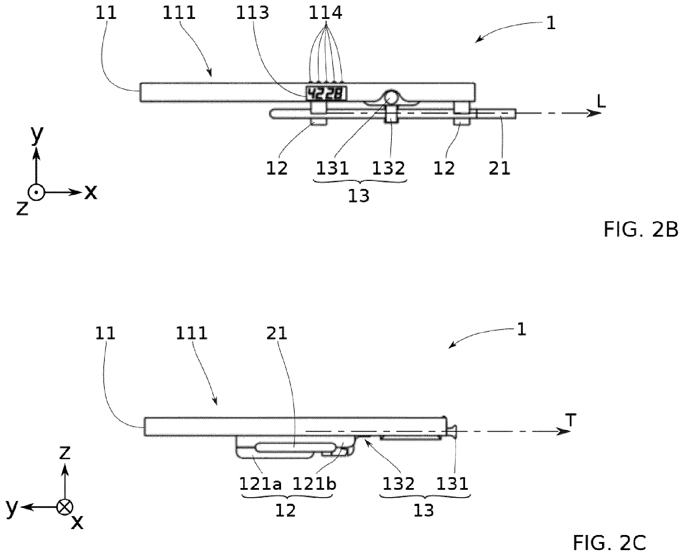

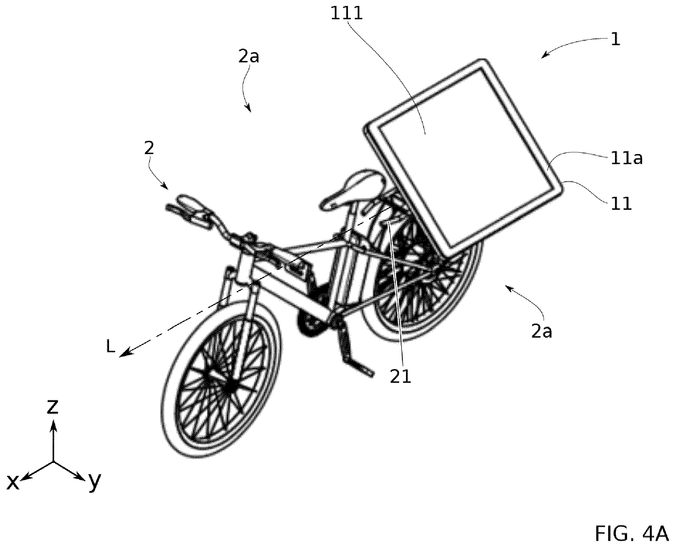

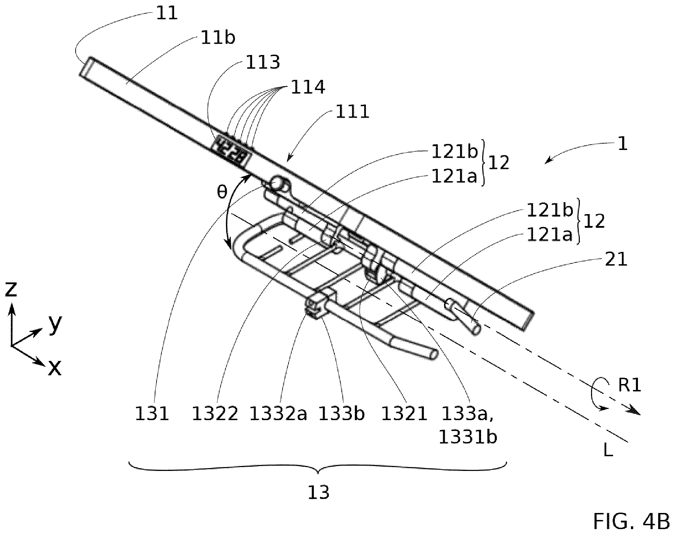

Le dispositif solaire 1 va maintenant être décrit en référence aux figures 2A à 5B.

Ainsi, le dispositif solaire 1 comprend un panneau photovoltaïque 111, ci-après désigné panneau 111. Le panneau 111 permet la récupération de l'énergie solaire. Le panneau 111 présente un cadre 11. Selon un exemple, le cadre 11 est indépendant du panneau 111. Ainsi, le panneau 111 peut être rapporté dans le cadre 11. Cela simplifie l'intégration du panneau 111 au dispositif solaire 1. Selon un exemple alternatif, le cadre 11 est formé par le panneau 111. Selon un exemple, le panneau 111 présente deux faces principales opposées et un bord inférieur.

Le dispositif solaire 1 comprend également un système d'inclinaison 12. Le système d'inclinaison 12 est configuré pour permettre une inclinaison du cadre 11. L'inclinaison du cadre 11 est réalisée autour d'un axe de rotation R1. L'axe de rotation R1 est un axe horizontal. Plus précisément l'axe de rotation R1 est compris dans un plan (x, y). L'axe de rotation R1 est parallèle à l'axe longitudinal L. L'axe de rotation R1 est situé, verticalement à la même hauteur que le support 21 du véhicule 2. L'axe de rotation R1 est à distance de l'axe longitudinale L. Ainsi l'axe de rotation R1 n'est pas centré sur le véhicule 2.

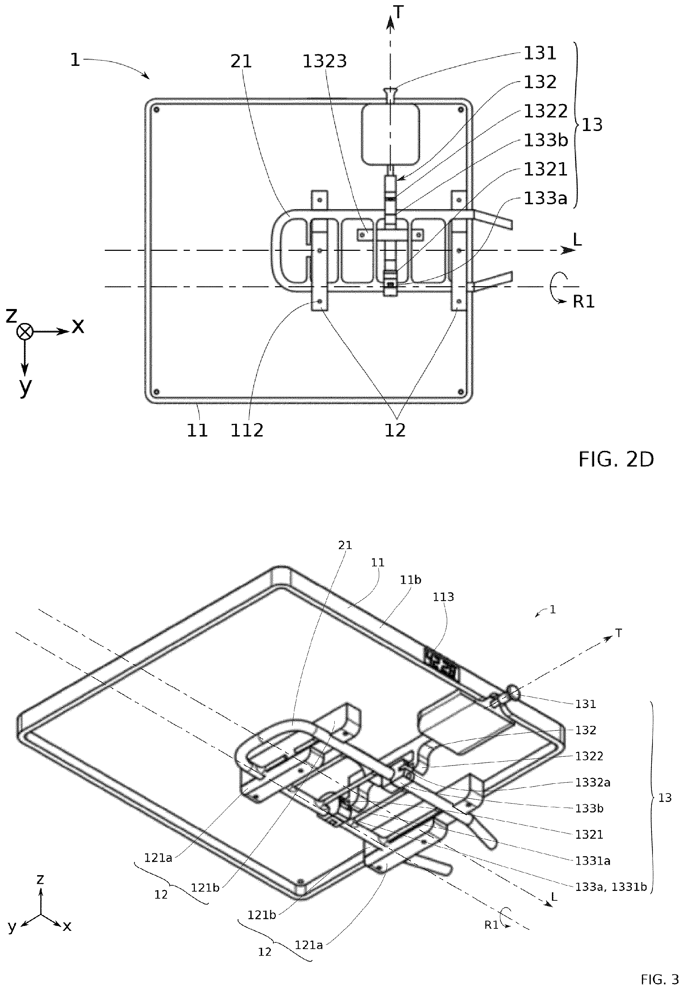

Le dispositif solaire 1 comprend également un système de verrouillage 13. Le système de verrouillage 13 est configuré pour sélectivement verrouiller et déverrouiller le système d'inclinaison 12 en position. De manière similaire, le système de verrouillage 13 permet un passage alternatif d'une configuration verrouillée à une configuration déverrouillée illustrée en figure 3. Le système de verrouillage 13 est ainsi configuré de sorte à permettre l'inclinaison du cadre 11 par rapport au support 21. Plus précisément, le système de verrouillage 13 permet l'inclinaison du cadre 11 selon une pluralité d'inclinaisons. Le système de verrouillage 13 permet ainsi le passage alternatif entre une position d'inclinaison minimale, horizontale, et une inclinaison maximale. La position d'inclinaison maximale pouvant être verticale. Plusieurs positions d'inclinaisons entre la position d'inclinaison minimale et celle maximale sont possibles. Le secteur angulaire θ délimité par la position d'inclinaison minimale et maximale est compris entre au moins 0° et 70° par rapport à l'horizontal. Préférentiellement, le secteur angulaire θ est compris entre 0° et 90°.

Ainsi, le panneau 111 peut être positionné à la verticale. Pour ce faire l'utilisateur actionne le système de verrouillage pour le placer en position déverrouillée, il déplace le panneau 111 en position d'inclinaison grâce au système d'inclinaison 12 et replace le système de verrouillage en position verrouillée lorsque l'inclinaison souhaitée est atteinte.

Selon un exemple, le système de verrouillage 13 comprend un organe de commande 131. L'organe de commande 131 peut être configuré pour être manipulé par un utilisateur. L'organe de commande 131 peut alors être configuré de sorte que l'utilisateur puisse le manipuler à une main. L'utilisateur peut alors manipuler l'organe de commande 131 afin que celui-ci translate suivant une direction dite de translation T. La translation de l'organe de commande 131 permet de sélectivement verrouiller ou déverrouiller le système d'inclinaison 12 en position. La direction de translation T peut s'étendre perpendiculairement à l'axe longitudinal L pour une inclinaison θ = 0° du cadre 11. Plus précisément la direction de translation T peut s'étendre perpendiculaire à un plan comprenant les faces principales du panneau 111.

Selon un exemple, l'organe de commande 131 est configuré de sorte que l'utilisateur puisse le manipuler à une main et incliner le cadre 11 tout en conservant la position de cette main. Plus précisément, l'organe de commande 131 peut être configuré de sorte que l'utilisateur puisse simultanément le manipuler avec certains des doigts de l'une de ses mains et incliner le cadre 11 en saisissant le cadre 11 notamment avec ses autres doigts. Ainsi l'organe de commande 131 peut être pris parmi une poignée ou une tirette.

Selon un exemple, le système de verrouillage comprend une serrure, telle une serrure à clé mécanique, à code ou communicante. Plus précisément, l'organe de commande 131 peut comprendre une serrure. Ainsi, le système de verrouillage 13 peut être verrouillée en position et ne peut être déverrouillé que par l'utilisateur du dispositif solaire 1 grâce à une introduction dans la serrure d'une clé associée à cette serrure, ou à l'entrée d'un code par l'utilisateur ou grâce à la coopération sans fil avec un objet communicant permettant de déverrouiller le système de verrouillage.

Selon un exemple, l'organe de commande 131 peut être relié à un organe mobile de verrouillage 132. Ainsi, lorsque l'utilisateur manipule l'organe de commande 131, il peut déplacer l'organe mobile de verrouillage 132 de sorte à le faire passer sélectivement dans une configuration verrouillée ou déverrouillée. De préférence, il peut faire translater l'organe mobile de verrouillage 132 suivant la direction de translation T. L'organe mobile de verrouillage 132 peut alors faire passer sélectivement dans une configuration verrouillée ou déverrouillée le système d'inclinaison 12 en position. Selon un mode de réalisation l'organe mobile de verrouillage 132 agit comme un pêne.

Selon un exemple, le dispositif solaire 1 comprend au moins un premier organe complémentaire de verrouillage 133a. De manière analogue, le système de verrouillage 13 comprend l'au moins un premier organe complémentaire de verrouillage 133a. L'au moins un premier organe complémentaire de verrouillage 133a peut être configuré pour être solidaire du support 21. Ainsi, l'au moins un premier organe complémentaire de verrouillage 133a est fixe. L'au moins un premier organe complémentaire de verrouillage 133a peut être configuré également de sorte à coopérer avec l'organe mobile de verrouillage 132. Ainsi, lorsque au moins une partie de l'organe mobile de verrouillage 132 est en prise avec l'au moins un premier organe complémentaire de verrouillage 133a, alors l'inclinaison du cadre 11 est verrouillée en position. Lorsque l'organe mobile de verrouillage 132 n'est pas en prise avec l'au moins un premier organe complémentaire de verrouillage 133a, alors, il peut y avoir rotation libre du cadre 11. Plus précisément, en configuration déverrouillée, il peut y avoir rotation libre du cadre 11 autour de l'axe de rotation R1.

Selon un premier mode de réalisation, le dispositif solaire 1 comprend un deuxième organe complémentaire de verrouillage 133b. De manière analogue, le système de verrouillage 13 comprend le deuxième organe complémentaire de verrouillage 133b. Le deuxième organe complémentaire de verrouillage 133b peut être configuré pour être solidaire du support 21. Ainsi, le deuxième organe complémentaire de verrouillage 133b est fixe. Le deuxième organe complémentaire de verrouillage 133b peut être configuré de sorte à coopérer avec l'organe mobile de verrouillage 132 seulement lorsque le cadre 11 est dans la position d'inclinaison minimale. Ainsi, lorsque θ = 0°, le deuxième organe complémentaire de verrouillage 133b et l'organe mobile de verrouillage 132 sont en configuration verrouillée. Ainsi, lorsque au moins une partie de l'organe mobile de verrouillage 132 est en prise avec le deuxième organe complémentaire de verrouillage 133n, alors l'inclinaison du cadre 11 est verrouillée en position d'inclinaison minimale. Lorsque l'organe mobile de verrouillage 132 n'est pas en prise avec le deuxième organe complémentaire de verrouillage 133b, alors, il peut y avoir rotation libre du cadre 11. Plus précisément, en configuration déverrouillée, il peut y avoir rotation libre du cadre 11 autour de l'axe de rotation R1.

Selon un exemple, illustré aux figures 1 à 2D, le dispositif solaire 1 est configuré de sorte qu'uniquement lorsque le cadre 11 est dans la position d'inclinaison minimale, l'organe mobile de verrouillage 132 coopère simultanément avec le premier organe complémentaire de verrouillage 133a et le deuxième organe complémentaire de verrouillage 133b. Ainsi, en configuration verrouillée le cadre 11 peut résister aux chocs de la route lorsque le véhicule 2 est en mouvement. Ainsi, suivant n'importe quelle inclinaison θ en configuration verrouillée, le cadre 11 résiste aux vibrations créées par le mouvement du véhicule 2.

Selon un exemple, l'un parmi le premier organe complémentaire de verrouillage 133a et l'organe mobile de verrouillage 132 comprend plusieurs encoches 1331a. Selon ce même exemple l'autre parmi le premier organe complémentaire de verrouillage 133a et l'organe mobile de verrouillage 132 comprend une première portion 1321. La première portion 1321 peut ainsi être configurée de sorte à coopérer avec chacune des encoches 1331a. La première portion 1321 peut selon un mode de réalisation être une saillie. De plus, selon un mode de réalisation chacune des encoches 1331a s'étendent radialement autour de l'axe de rotation R1. Ainsi, chacune des encoches 1331a permet plusieurs inclinaisons θ différentes. L'ensemble des encoches 1331a peut ainsi former une roue à encoches 1331b.

Selon un exemple, l'un parmi le deuxième organe complémentaire de verrouillage 133b et l'organe mobile de verrouillage 132 comprend une encoche 1332a. Selon ce même exemple, l'autre parmi le deuxième organe complémentaire de verrouillage 133b et l'organe mobile de verrouillage 132 comprend une deuxième portion 1322. La deuxième portion 1322 peut ainsi être configurée de sorte à coopérer avec l'encoche 1332a. La deuxième portion 1322 peut selon un mode de réalisation être une saillie.

Ainsi, lors du déverrouillage du cadre 11 et donc du système de verrouillage 13, la première portion 1321 et la deuxième portion 1322 ne sont plus en prises avec respectivement la roue à encoches 1331b et l'encoche 1332a. Le cadre 11 peut donc pivoter autour de l'axe de rotation R1. Afin de fixer suivant une position inclinée θ, l'utilisateur lâche le système de verrouillage 13 afin que celui-ci passe en configuration verrouillée selon une inclinaison θ voulue par l'utilisateur. Des positions θ d'inclinaisons sont illustrées aux figures 1, 4A, 4B, 5A et 5B.

Selon un exemple, afin que le système de verrouillage 13 passe d'une configuration déverrouillée à une configuration verrouillée, l'utilisateur lâche l'organe de commande 131. Le système de verrouillage 13 peut alors comprendre un organe élastique relié à la fois à l'organe de commande 131 et à l'organe mobile de verrouillage 132. Ainsi l'organe élastique peut être configuré de sorte à ramener l'organe mobile de verrouillage 132 depuis la configuration de déverrouillage vers la configuration de verrouillage. La présence de cet organe élastique permet une facilité d'utilisation du dispositif solaire 1 tout en améliorant la sécurité du système de verrouillage 13 en permettant un maintien accru en cas de vibration lors du roulage.

Selon un exemple, le système de verrouillage 13 comprend également une patte de fixation 1323. La patte de fixation 1323 peut être configurée de sorte à maintenir l'axe de translation T de l'organe mobile de verrouillage 132. La patte de fixation 1323 peut également être configurée de sorte à relier le cadre 11 au système de verrouillage 13. Plus précisément, la patte de fixation 1323 peut permettre de relier de façon libre l'organe mobile de verrouillage 132 avec le cadre 11. Da façon non limitative, les figures illustres le cas où, le premier organe complémentaire de verrouillage 133a et le deuxième organe complémentaire de verrouillage 133b sont configurés respectivement de sorte à comprendre les encoches 1331a et l'encoche 1332a et à ce que l'organe mobile de verrouillage 132 comprend la première portion 1321 et la deuxième portion 1322.

Selon une alternative, le système de verrouillage 13 peut comprendre, en remplacement des encoches 1331a et de la première portion 1321 un disque de friction couplé à un organe élastique. L'organe élastique étant configuré pour maintenir en friction le disque lorsqu'il n'y a pas de sollicitation du système par un utilisateur. Cette solution alternative peut être assimilée à un système d'embrayage.

Une autre solution alternative pourrait être un système motorisé, par exemple pneumatique, permettant d'ajuster à fréquence régulière l'angle θ idéal du panneau 111. Ce système peut être un système suiveur du soleil, habituellement désigné par le vocable anglais tracker, qui permet d'optimiser en permanence l'inclinaison du panneau afin de maximiser la puissance produite par le panneau 111.

Selon un exemple, le système d'inclinaison 12 comprend au moins une charnière 121a. Lorsque le système de verrouillage 13 est en configuration déverrouillée, le système d'inclinaison 12 et plus précisément l'au moins une charnière 121a permet l'inclinaison du cadre 11. Plus précisément l'au moins une charnière 121a peut être configurée de sorte à réaliser une liaison pivot entre le cadre 11 et le support 21. L'au moins une charnière 121a peut alors réaliser cette liaison pivot autour de l'axe de rotation R1. De préférence, le système d'inclinaison 12 peut comprendre deux charnières 121a. Les deux charnières 121a pourrait alors être positionnées en deux points distants sur l'axe de rotation afin de faciliter l'inclinaison du cadre 11 autour de l'axe de rotation R1. Ainsi l'au moins une charnière 121a peut être positionnée sur le support 21. La charnière 121a peut ainsi présenter deux pièces permettant d'entourer librement le support 21. Les deux pièces de la charnière 121a pourraient être fixées entre elles par des vis 112 (illustrées en figure 2D).

Selon un exemple, le système d'inclinaison comprend également au moins une butée 121b. L'au moins une butée 121b peut être configurée pour arrêter la course du cadre 11. Plus précisément, l'au moins une butée 121b peut permettre d'arrêter la rotation suivant l'axe de rotation R1 lorsque le cadre 11 est en position d'inclinaison θ minimale. L'au moins une butée 121b peut être positionnée en contact avec le support 21. Plus précisément l'au moins une butée 121b peut présenter une forme complémentaire du support 21. De préférence, le système d'inclinaison 12 peut comprendre deux butées 121b.

Selon un exemple, la charnière 121a et la butée 121b peuvent être deux éléments distincts. Selon un exemple, la charnière 121a et la butée 121b peuvent être une seule pièce s'étendant sur une dimension transversale du cadre 11.

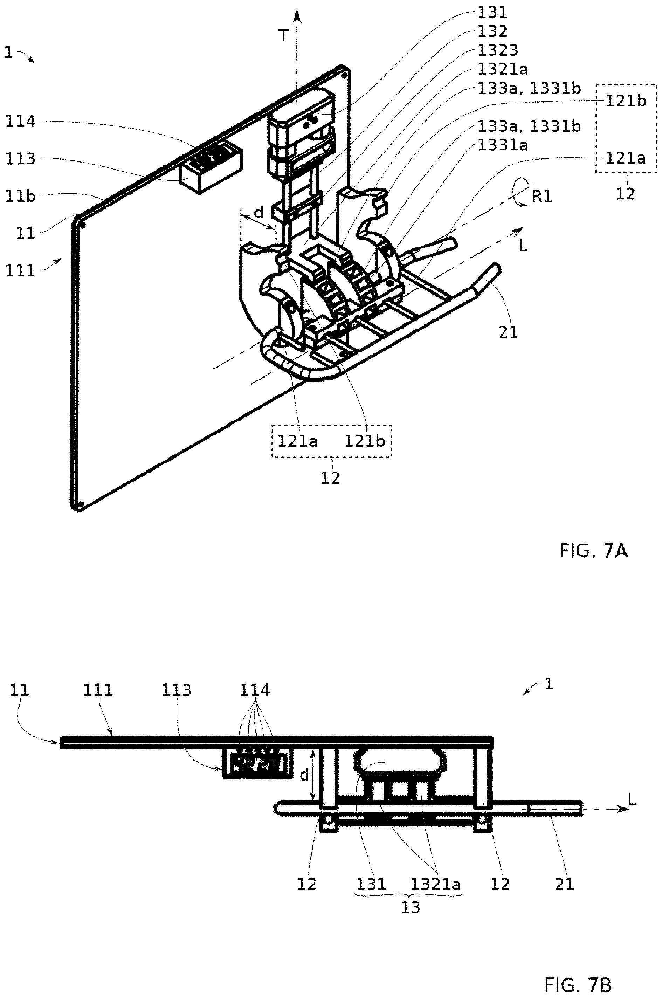

Un deuxième mode de réalisation est illustré aux figures 7A et 7B. Le deuxième mode de réalisation peut présenter les mêmes caractéristiques que présentées dans le premier mode de réalisation. Ainsi, toutes les caractéristiques décrites en références aux figures précédentes sont combinables avec ce nouveau mode de réalisation. Le deuxième mode de réalisation peut présenter également des différences détaillées ci-après.

Selon le deuxième mode de réalisation, le système d'inclinaison 12 présente une dimension verticale plus importante que dans le mode de réalisation présenté précédemment. Ainsi, de manière analogue la distance d entre la butée 121b, de préférence entre une surface de la butée 121b cette surface étant en contact avec le support 21, et une face du panneau 11 est supérieure ou égale à 2 cm (centimètres), de préférence supérieure ou égale à 5 cm. De manière similaire, la distance d entre l'au moins une charnière 121a, et une face du panneau 11 est supérieure ou égale à 2 cm, de préférence supérieure ou égale à 5cm. Ainsi, selon ce mode de réalisation le positionnement d'un sac de voyage ou d'une sacoche sur le support 21 est facilité.

Selon ce mode de réalisation, le système de verrouillage 13 comprend deux premiers organes complémentaires de verrouillages 133a. Les deux premiers organes complémentaires de verrouillage 133a peuvent être configurés pour être solidaires du support 21. Les deux premiers organes complémentaires de verrouillage 133a peuvent coopérer avec l'organe mobile de verrouillage 132 de sorte à, lorsqu'ils sont en prise, verrouiller l'inclinaison du cadre 11 et de sorte à, lorsqu'ils ne sont pas en prise, autoriser une libre rotation du cadre 11 autour de l'axe de rotation R1. Cela permet ainsi d'avoir une bonne répartition des forces. Plus précisément les deux premiers organes complémentaires de verrouillage 133a sont positionnés alignés selon l'axe de rotation R1. De ce fait, les deux premiers organes complémentaires de verrouillage 133a peuvent être positionnés sur une même portion du support 21, laissant les autres portions du support 21 libre de tout élément de verrouillage. Ainsi, le positionnement d'une sacoche ou d'un élément de bagage sur le support 21 est facilité. Les deux premiers organes complémentaires de verrouillage 133a peuvent présenter les mêmes caractéristiques que le premier organe complémentaire de verrouillage 133a du premier mode de réalisation.

Selon le deuxième mode de réalisation, la première portion 1321 de l'organe mobile de verrouillage 132 comprend deux zones de verrouillage 1321a. Les deux zones de verrouillage 1321a peuvent former chacune une saillie ou une extrémité d'une tige de la première portion 1321. Les deux zones de verrouillage 1321a peuvent être configurées de sorte à coopérer simultanément avec chacune des encoches 1331a des deux premiers organes complémentaires de verrouillage 133a.

Selon un exemple, le cadre 11 comprend un dispositif électronique 113. Le dispositif électronique 113 peut être configuré de sorte à fournir une donnée relative à une puissance fournie par le panneau 111 selon l'inclinaison θ du cadre 11. La donnée relative à une puissance fournie par le panneau photovoltaïque 111 peut être prise parmi : une valeur de puissance, un niveau sur une jauge, une valeur sur une échelle de valeurs, un nombre de diodes électroluminescentes (DEL) éclairées, une couleur parmi une pluralité de couleurs ou un code couleur, ou une icône parmi une liste d'icônes. Par exemple, le niveau de la jauge, la valeur sur une échelle de valeurs, le nombre de DEL éclairées ou la couleur permettent d'indiquer à l'utilisateur si une inclinaison actuelle est correcte ou si elle est meilleure ou moins bonne qu'une position précédente. Par exemple, on peut prévoir que la donnée varie pour chaque inclinaison adoptée par l'utilisateur afin de guider ce dernier. Ainsi, le jauge monte lorsque l'inclinaison se rapproche de l'inclinaison optimale et baisse lorsque l'inclinaison s'éloigne de l'inclinaison optimale. De manière combinée ou alternative, on peut prévoir une variation de couleur, selon un code couleur, par exemple un passage d'une couleur rouge à une couleur verte, lorsque l'inclinaison passe d'une position défavorable à une position favorable. De même on peut prévoir que le nombre de DEL éclairées augmente lorsque l'inclinaison se rapproche de l'inclinaison optimale. Ce guidage peut également être effectué à l'aide d'icônes, par exemple une flèche dans un premier sens, une croix ou une icône exprimant un sentiment négatif lorsque l'inclinaison n'est pas bonne; une icône exprimant un sentiment positif lorsque l'inclinaison est correcte.

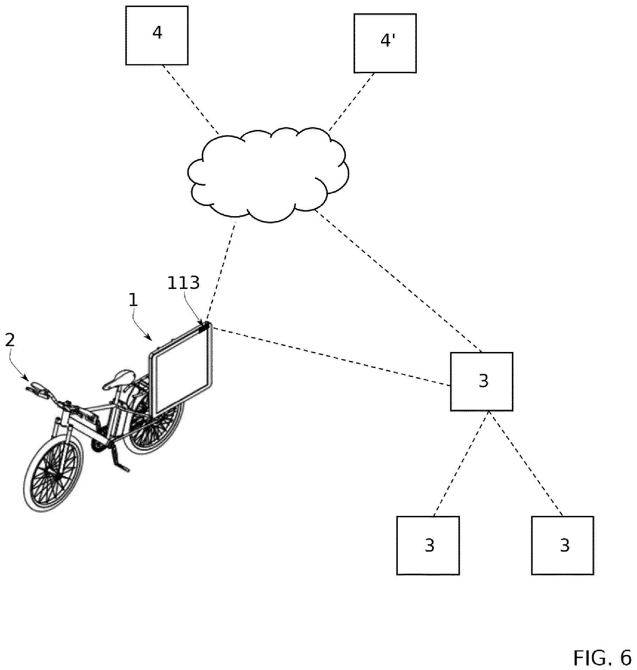

Avantageusement, la donnée relative à une puissance est fonction d'une puissance produite ou fournie par le panneau 111. Cette donnée peut être basée sur une mesure d'un paramètre électrique lié à la puissance produite ou fournie par le panneau 111. Le paramètre est par exemple au moins l'un parmi : une puissance, une tension électrique, une intensité électrique. Cela permet de guider efficacement l'utilisateur, sans avoir besoin de connaitre l'inclinaison du panneau 111. Ainsi, il n'est pas nécessaire d'équiper le panneau 111 de capteurs de position ou de mouvement. La robustesse du dispositif en est améliorée et le cout du dispositif en est réduit. De préférence, le cadre 11 est configuré de sorte à fournir par exemple à afficher cette donnée relative à une puissance fournie. Le dispositif peut alors comprendre, un écran pour afficher au moins cette donnée. L'écran est avantageusement porté par le dispositif. Alternativement, il est porté par le véhicule et en communication avec le dispositif. Pour ce faire le cadre 11 peut comprendre un pourtour 11a et un côté 11b. L'un parmi le pourtour 11a et le côté 11b peut comprendre un dispositif d'affichage tel un écran ou des diodes électroluminescentes 114. Ainsi suivant l'inclinaison θ du cadre 11 plusieurs diodes 114 peuvent s'allumer. Si toutes les diodes 114 sont allumées alors, selon un exemple, la puissance reçue par le panneau 111 est maximale. Selon un exemple, le dispositif électronique 113 fournie cette donnée sans l'afficher lui-même. Dans ce cas, le dispositif électronique 113 comprend un module de communication. Le module de communication peut alors être configuré de sorte à échanger par liaison sans fil des données prise parmi un temps de stationnement prévu renseigné par l'utilisateur, une estimation d'énergie collectée, une donnée d'inclinaison du panneau photovoltaïque 111. Les échanges entre le module de communication et des éléments distants sont illustrés en figure 6. Le module de communication peut ainsi communiquer avec un terminal distant tel un terminal utilisateur 3 pris parmi un téléphone intelligent, un ordinateur, et/ou avec au moins un serveur 4,4'.

Selon un exemple, un utilisateur peut ainsi renseigner sur son terminal utilisateur 3 son temps de stationnement prévu renseigné par l'utilisateur et obtenir d'au moins un serveur 4, 4' relié à l'application l'inclinaison optimale du cadre 11. L'utilisateur peut alors incliner le cadre 11 et regarder soit directement sur le cadre 11 soit sur son terminal utilisateur 3 s'il a atteint cette inclinaison optimale.

Selon un exemple, au moins l'un parmi les serveurs 4, 4' est un serveur 4, 4' permettant d'accéder à des informations telles la météo, la courbe du soleil ou la position du véhicule 2. Ainsi, le module de communication du dispositif électronique 113 peut communiquer avec plusieurs serveurs 4, 4' en même temps.

Selon un mode de réalisation, les calculs de temps de positionnement, temps de recharge ou tout autre calcul peut être réalisé sur l'un parmi les serveurs 4, 4'. Les résultats des calculs sont ensuite envoyés au terminal utilisateur 3. Le terminal utilisateur 3 peut alors recevoir par exemple une durée de recharge calculée suivant son positionnement. L'autre parmi les serveurs 4, 4' peut donner d'autre information telle la météo.

Dans la suite de la description, nous allons considérer un ensemble comprenant le véhicule 2 et un dispositif solaire 1 tel que décrit précédemment.

Selon un exemple, le véhicule 2 est un cycle par exemple un bicycle, un tricycle ou un quadricycle. Le véhicule 2 comprend ainsi un dispositif de propulsion musculaire, comprenant typiquement un pédalier et des pédales et dont l'actionnement par l'utilisateur entraine en rotation au moins l'une des roues du cycle.

Selon un exemple, le véhicule 2 comprend une structure, ci-avant désignée support 21. Cette structure 21 peut être pris parmi un porte bagage et un coffre. Le dispositif solaire 1 peut alors être monté sur la structure 21. De préférence, le dispositif solaire 1 est supporté entièrement par la structure 21. Selon un exemple, le cadre 11 s'étend au-delà de la structure 21. Ainsi lorsque le véhicule 2 est un vélo comprenant une selle, le dispositif solaire 1 est configuré de sorte que le cadre 11 est situé en arrière de la selle par rapport à une direction d'avancée du vélo. Typiquement l'axe de rotation R1 est situé, verticalement, à une distance inférieure à 15cm du porte bagage. Cela permet ainsi de réduire la hauteur du centre de gravité essentiel pour l'équilibre sur le vélo 2. Selon un exemple, la structure 21 peut avoir deux montants positionnés parallèlement à la l'axe longitudinal du véhicule 2. Ainsi le dispositif solaire 1 peut avoir son axe de rotation R1 positionné sur l'un parmi les deux montants. Selon un solution alternative un axe de rotation peut être positionné sur chacun des montants, le système de verrouillage 13 permettant de déverrouiller le dispositif solaire 1 suivant l'un des deux axes indépendamment.

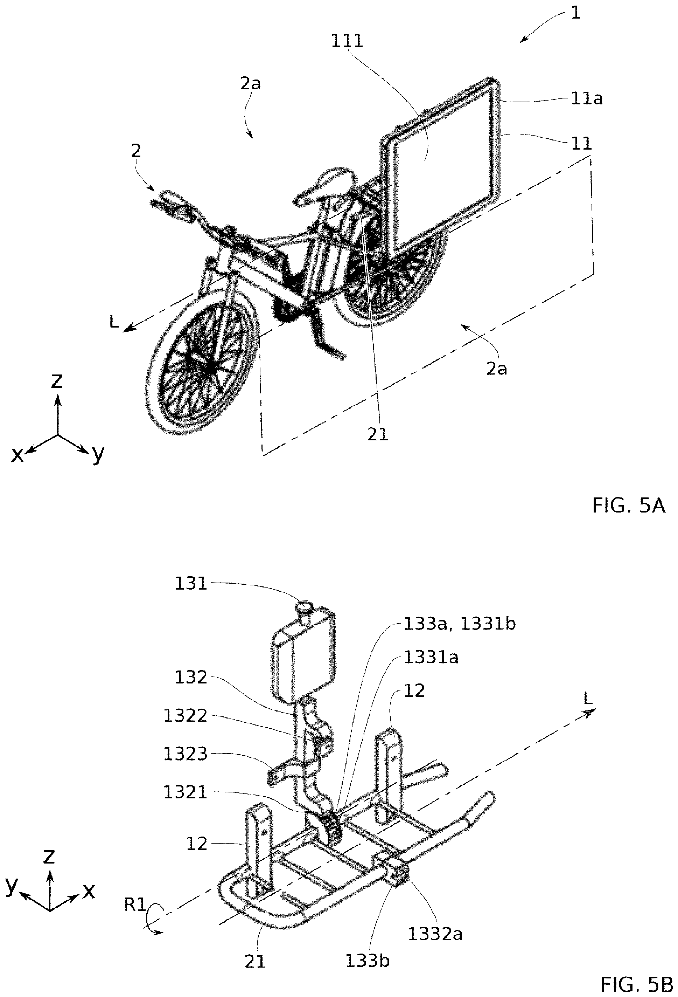

Selon un exemple, le véhicule 2 présente deux flancs 2a latéraux. Lorsque le dispositif solaire 1 est verrouillé en position d'inclinaison θ maximale, illustrée en figure 5A, le cadre 11 peut être, en partie au moins, situé le long d'un flanc latéral 2a, de préférence de l'un quelconque des deux flancs 2a latéraux. Ainsi le panneau 111 est positionné sur un flanc latéral 2a du véhicule 2 lorsque θ=90°. Plus précisément, le cadre 11 peut présenter un bord inférieur. Le dispositif solaire 1 peut alors être configuré de sorte qu'au moins en position d'inclinaison θ maximale, un plan vertical passant par le bord inférieur délimite deux portions d'espace. La structure 21 peut alors être entièrement comprise dans l'une seulement de ces deux portions d'espace.

Selon un exemple, une butée additionnelle est configurée de sorte à ce qu'en position d'inclinaison θ maximale, le panneau 111 n'entre pas en contact avec un flanc latéral 2a.

Naturellement, l'ensemble de la description précédente décrit un mode de réalisation présentant l'axe de rotation R1 positionné sur l'un parmi les deux montants de la structure 21. Il est possible, selon un exemple, que la structure 21 ne présente qu'un seul montant.

Selon ce mode de réalisation, le montant peut être placé de sorte à s'étendre selon l'axe longitudinal L. Plus précisément, le montant peut être positionné de sorte à s'étendre colinéairement à l'axe longitudinal L. Cela permet ainsi d'éviter un déséquilibre du véhicule dans le cadre de la présente d'un seul montant. La structure 21 peut être une structure amovible fixable sur un véhicule 2. La structure 21 peut être fixée, par exemple, sur la tige de selle d'un vélo. La structure 21 peut être un porte bagage mono-axe.

Selon un exemple non limitatif de ce mode de réalisation, la structure 21 comprend un premier et un deuxième cylindres, de préférence creux. Les premier et deuxième cylindres creux peuvent être positionnés de sorte à présenter un même axe de révolution. Cet axe de révolution peut s'étendre suivant l'axe longitudinal L. Le premier cylindre peut être fixe. Le premier cylindre peut par exemple être fixé au véhicule 2. Plus précisément, une première base du premier cylindre est fixée au véhicule 2. Le premier cylindre peut présenter une dimension longitudinale plus grande que le deuxième cylindre. Le deuxième cylindre creux peut être fixé de sorte à permettre une rotation du deuxième cylindre par rapport au premier cylindre suivant l'axe de révolution. Le dispositif solaire 1 peut alors être fixé, par exemple par soudage, au deuxième cylindre. Le dispositif solaire 1 peut ainsi être mis en rotation suivant l'axe longitudinal L.

Selon cet exemple, le deuxième cylindre comprend un filetage male interrompu par des encoches. Les encoches peuvent s'étendre suivant l'axe longitudinal L. Le filetage male peut alors être de forme conique.

Selon cet exemple, l'organe de commande 131, par exemple une poignée, peut être positionné à une deuxième base du premier cylindre. L'organe de commande 131 peut comprendre un filetage femelle. Le filetage femelle peut être positionné de sorte à être en coopération avec le filetage mâle conique du premier cylindre fixe. Ainsi, la coopération du filetage femelle et du filetage mâle permet de verrouiller et déverrouiller le deuxième cylindre rotatif dans différentes inclinaisons θ du cadre 11. La coopération entre le filetage femelle et le filetage mâle peut être associée à un organe mobile de verrouillage 132. L'organe de commande 131 permettant, de préférence par un mouvement rotatif, dans le sens horaire de verrouiller le cadre 11 dans une inclinaison et dans le sens anti-horaire de le déverrouiller pour permettre au cadre 11 de s'incliner dans une autre inclinaison θ. Le dispositif solaire 1 peut donc être verrouillé horizontalement, ou incliné selon différents angles θ, jusqu'à un angle perpendiculaire à l'axe de rotation qui est aligné avec l'axe longitudinal L du véhicule 2. Cela permet ainsi de positionner le panneau 111 dans une position optimale par rapport au soleil.

Selon un autre exemple, un axe fileté est positionné au centre de premier et du deuxième cylindres creux. Les diamètres du premier et deuxième cylindres peuvent alors être identiques. Le premier cylindre peut comprendre, au niveau de la deuxième base, une crénelure. Le deuxième cylindre peut également comprendre une crénelure. La crénelure du premier cylindre est alors identique à la crénelure du deuxième cylindre. Ainsi, la crénelure du deuxième cylindre peut s'emboiter dans la crénelure du premier cylindre. Cela permet d'avoir ainsi un système de verrouillage efficace. Le deuxième cylindre peut être solidaire du dispositif solaire 1. Ainsi, la rotation du deuxième cylindre peut entrainer la rotation du dispositif solaire 1. Un écrou solidaire d'un organe de commande 131 de type poignée et engagé sur l'axe fileté permet de déverrouiller le deuxième cylindre creux. Cela permet d'engager une rotation suivant l'axe longitudinal L. Cette rotation peut être réalisée suivant une inclinaison θ jusqu'à trouver la meilleure orientation. La meilleure orientation correspond à une inclinaison θ pour une recharge solaire optimale. Une fois cette inclinaison θ identifiée, par exemple par le dispositif électronique 113, l'organe de commande 131 permet de verrouiller à nouveau le deuxième cylindre jusqu'à l'emboitement des deux crénelures.

L'invention n'est pas limitée aux modes de réalisations précédemment décrits et s'étend à tous les modes de réalisation couverts par l'invention. La présente invention ne se limite pas aux exemples précédemment décrits.

Par exemple, bien que la précédente description concerne plus particulièrement les bicyclettes, l'invention s'applique également aux autres véhicules à propulsion musculaire assisté par un moteur électrique tels que les tricycles ou quadricycles, ainsi qu'aux autres véhicules tels que les motocycles et automobiles.

Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention.

### REFERENCES NUMERIQUES

1 : Dispositif solaire
11 : cadre
11a : pourtour
11b : côté
111 : panneau photovoltaïque
112 : vis
113 : dispositif électronique
114 : diodes électroluminescentes
12 : système d'inclinaison
121a : charnière
121b : butée
θ : rotation (angle de rotation)
R1 : axe de rotation
13 : système de verrouillage
131 : organe de commande (poignée)
132 : organe mobile de verrouillage (pêne selon un mode de réalisation)
1321 : première portion (saillie)
1322 : deuxième portion (saillie)
1321a : première portion à deux zones de verrouillage
1323 : patte de fixation (élément fixant le panneau au système de verrouillage tout en permettant à l'organe mobile de verrouillage de réaliser une translation)
133a : premier organe complémentaire de verrouillage (configuré pour coopérer avec la première portion dans la configuration de verrouillage)
1331a : encoches
1331b : roue à encoche
133b : deuxième organe complémentaire de verrouillage (configuré pour coopérer avec la deuxième portion dans la configuration de verrouillage)
1332a : encoche
T : direction de translation
2 : Véhicule
2a : flanc latéral
L : axe longitudinal du véhicule
21 : support/structure (pouvant être un porte bagage)
3 : appareil
4 : serveur
4' : serveur
d : distance entre la butée et une face du panneau

## Revendications

1. Dispositif solaire (1) de recharge d'un véhicule (2), par exemple d'un vélo, le véhicule présentant un axe longitudinal (L), le dispositif solaire (1) étant configuré pour être positionné sur un support (21) du véhicule (2), le dispositif solaire (1) comprenant :
• un panneau photovoltaïque (111) présentant un cadre (11),
• un système d'inclinaison (12) configuré pour permettre une inclinaison du cadre (11), autour d'un axe de rotation (R1) horizontal et parallèle à l'axe longitudinal (L),
• un système de verrouillage (13) configuré pour sélectivement verrouiller et déverrouiller le système d'inclinaison (12) en position, de sorte à permettre une inclinaison du cadre (11) sur le support (21) selon une pluralité d'inclinaisons entre une position d'inclinaison minimale, horizontale, et une inclinaison maximale délimitant un secteur angulaire θ compris entre au moins 0° et 70° par rapport à l'horizontale, de préférence entre 0° et 90°,
le système de verrouillage (13) comprenant un organe de commande (131) et un organe mobile de verrouillage (132), l'organe de commande (131) étant configuré pour être manipulé par un utilisateur de sorte à déplacer l'organe mobile de verrouillage, de préférence de sorte à faire translater (132) l'organe mobile de verrouillage (132) suivant une direction dite de translation (T), afin de sélectivement verrouiller ou déverrouiller le système d'inclinaison (12) en position, l'organe de commande (131) comprenant l'un parmi une poignée ou une tirette,
le dispositif (1) comprenant un dispositif électronique (113) configuré de sorte à fournir, de préférence à afficher, une donnée relative à une puissance fournie par le panneau photovoltaïque (111) en fonction de l'inclinaison θ du cadre (11).

2. Dispositif solaire (1) selon la revendication précédente, dans lequel l'organe de commande (131) est configuré de sorte que l'utilisateur puisse le manipuler à une main et incliner le cadre (11) tout en conservant la position de cette main.

3. Dispositif solaire (1) selon l'une quelconque des revendications précédentes, dans lequel l'organe de commande (131) est configuré de sorte que l'utilisateur puisse simultanément le manipuler avec certains des doigts de l'une de ses mains et incliner le cadre (11) en saisissant le cadre notamment avec ses autres doigts.

4. Dispositif solaire (1) selon l'une quelconque des revendications précédentes dans lequel, le dispositif solaire (1) comprend au moins un premier organe complémentaire de verrouillage (133a) configuré pour être solidaire du support (21) et pour coopérer avec l'organe mobile de verrouillage (132) de sorte à, lorsqu'ils sont en prise, verrouiller l'inclinaison du cadre (11) et de sorte à, lorsqu'ils ne sont pas en prise, autoriser une libre rotation du cadre (11) autour de l'axe de rotation (R1).

5. Dispositif solaire (1) selon l'une quelconque des revendications précédentes dans lequel, le dispositif solaire (1) comprend un organe, désigné deuxième organe complémentaire de verrouillage (133b), configuré pour être solidaire du support (21) et pour coopérer avec l'organe mobile de verrouillage (132) uniquement lorsque le cadre (11) est dans la position d'inclinaison θ minimale, de sorte à, lorsqu'ils sont en prise, verrouiller l'inclinaison du cadre (11) et de sorte à, lorsqu'ils ne sont pas prise, autoriser une libre rotation du cadre (11) autour de l'axe de rotation (R1).

6. Dispositif solaire (1) selon les deux revendications précédentes prisent en combinaison dans lequel, le dispositif solaire (1) est configuré pour que, uniquement lorsque le cadre (11) est dans la position d'inclinaison θ minimale, l'organe mobile de verrouillage (132) coopère simultanément avec le premier organe complémentaire de verrouillage (133a) et avec le deuxième organe complémentaire de verrouillage (133b).

7. Dispositif solaire (1) selon l'une quelconque des revendications précédentes dans lequel le système d'inclinaison (12) comprend au moins une charnière (121a), l'au moins une charnière (121a) étant configuré de sorte à réaliser une liaison pivot entre le cadre (11) et le support (21) autour de l'axe de rotation (R1).

8. Dispositif solaire (1) selon l'une quelconque des revendications précédentes dans lequel le système d'inclinaison (12) comprend une butée (121b), la butée (121b) étant configuré pour être une butée de fin de course dans la position d'inclinaison θ minimale du cadre (11).

9. Dispositif solaire (1) selon l'une quelconque des revendications précédentes dans lequel, la donnée relative à une puissance fournie par le panneau photovoltaïque (111) est prise parmi : une valeur de puissance, un niveau sur une jauge, une valeur sur une échelle de valeurs, un nombre de diodes électroluminescentes (DEL) éclairées, une couleur parmi une pluralité de couleurs ou un code couleur, ou une icône parmi une liste d'icônes.

10. Dispositif solaire (1) selon l'une quelconque des revendications précédentes dans lequel, le dispositif électronique (113) comprend un module de communication configuré de sorte à échanger par liaison sans fil des données prise parmi un temps de stationnement prévu renseigné par l'utilisateur, une estimation d'énergie collectée, une donnée d'inclinaison du panneau photovoltaïque (111) avec un terminal distant tel un terminal utilisateur (3) pris parmi un téléphone intelligent, un ordinateur, et/ou avec un serveur (4,4').

11. Ensemble comprenant un véhicule (2), de préférence un cycle, et un dispositif solaire (1) selon l'une quelconque des revendications précédentes équipant le véhicule (2).

12. Ensemble selon la revendication précédente dans lequel le véhicule (2) comprend une structure (21) prise parmi un porte bagage et un coffre, et dans lequel le dispositif solaire (1) est monté sur ladite structure (21), de préférence en étant entièrement supporté par ladite structure (21).

13. Ensemble selon l'une quelconque des deux revendications précédentes dans lequel le véhicule (2) est pris parmi : un bicycle, un tricycle, un quadricycle.

14. Ensemble selon l'une quelconque des trois revendications précédentes dans lequel le véhicule (2) présente deux flancs (2a) latéraux et le dispositif (1) est configuré de sorte qu'au moins en position d'inclinaison θ maximale, le cadre (11) est, en partie au moins, situé le long d'un flanc latéral (2a), de préférence de l'un quelconque des deux flancs 2a latéraux.

15. Ensemble selon l'une quelconque des trois revendications précédentes dans lequel, le cadre (11) présente un bord inférieur et le dispositif est configuré de sorte qu'au moins en position d'inclinaison θ maximale, un plan vertical passant par le bord inférieur délimite deux portions d'espace, la structure (21) étant entièrement comprise dans l'une seulement de ces deux portions d'espace.
